# EUROPEAN PATENT APPLICATION

(11) **EP 4 700 879 A1**
(43) Date of publication of application: **25.02.2026**
(21) Application number: 25183575.7
(22) Date of filing: 18.06.2025
(51) Int. Cl.: H01M 10/04, H01M 10/0562, H01M 10/0587

(54) **ELECTRODE ASSEMBLY AND CYLINDRICAL ALL-SOLID-STATE BATTERY INCLUDING THE SAME**

(30) Priority: 21.06.2024 KR 20240080889
(71) Applicant: SAMSUNG SDI CO., LTD., Yongin-si, Gyeonggi-do 17084 (KR)
(72) Inventor: CHOI, Jinkyu, 17084 Gyeonggi-do (KR)
(74) Representative: Michalski Hüttermann & Partner Patentanwälte mbB

(57) **Abstract**

Example embodiments include electrode assemblies and all-solid-state batteries. The electrode assembly includes a first solid electrolyte layer, a positive electrode layer, a second solid electrolyte layer, and a negative electrode layer that are disposed along a radial direction of the electrode assembly. The positive electrode layer includes a positive electrode current collector, a first positive electrode active material layer on a first surface of the positive electrode current collector and in contact with the first solid electrolyte layer. A first width of the first positive electrode active material layer is less than a second width of the first solid electrolyte layer, a first buffer structure adjacent to a first side of the first positive electrode active material layer, and a second buffer structure adjacent to a second side of the first positive electrode active material layer.

## Description

### CROSS-REFERENCE TO RELATED APPLICATION

This U.S. nonprovisional application claims priority under 35 U.S.C § 119 to Korean Patent Application No. 10-2024-0080889 filed on June 21, 2024 in the Korean Intellectual Property Office, the disclosure of which is hereby incorporated by reference in its entirety.

### BACKGROUND

The present disclosure relates to an all-solid-state battery, and more particularly, to a cylindrically wound electrode assembly and a cylindrical all-solid-state battery including the cylindrically wound electrode assembly.

Active development of high-energy-density and safe batteries is driven by industrial demands. For example, lithium ion batteries are being commercialized not only in formation-related and communication devices but also in, e.g., the automotive industry. In the automotive industry, safety is particularly emphasized due to its direct relation to human lives.

As all-solid-state batteries do not use flammable organic dispersion mediums, the possibility of fire or explosion may be significantly reduced even in the event of a short-circuit. Therefore, all-solid-state battery may have desired or improved stability.

### SUMMARY

An example embodiment of the present disclosure includes a wound electrode assembly capable of being accommodated in a cylindrical casing.

An example embodiment of the present disclosure includes a cylindrical all-solid-state battery.

According to an example embodiment of the present disclosure, a cylindrically wound electrode assembly may include a first solid electrolyte layer, a positive electrode layer, a second solid electrolyte layer, and a negative electrode layer. The first solid electrolyte layer, the positive electrode layer, the second solid electrolyte layer, and the negative electrode layer may be disposed, e.g., sequentially disposed, along a radial direction of the electrode assembly. The positive electrode layer may include a positive electrode current collector, a first positive electrode active material layer on a first surface of the positive electrode current collector and in contact with the first solid electrolyte layer. A first width in an axial direction of the first positive electrode active material layer is less than a second width in the axial direction of the first solid electrolyte layer, a first buffer structure adjacent to a first side of the first positive electrode active material layer, and a second buffer structure adjacent to a second side of the first positive electrode active material layer.

According to an example embodiment of the present disclosure, a cylindrical all-solid-state battery may include a cylindrically wound electrode assembly, a cylindrical casing that accommodates the electrode assembly, an elastic pad between the electrode assembly and the cylindrical casing, and a cap assembly that closes an opened upper portion of the cylindrical casing. The electrode assembly may include a positive electrode layer, a negative electrode layer, and a solid electrolyte layer between the positive electrode layer and the negative electrode layer. The elastic pad may wrap an outermost portion of the electrode assembly.

### BRIEF DESCRIPTION OF DRAWINGS

FIG. 1 is a cross-sectional view illustrating an all-solid-state battery according to an example embodiment of the present disclosure.
FIG. 2 is a cross-sectional view illustrating an all-solid-state battery according to an example embodiment of the present disclosure.
FIG. 3 is a plan view illustrating a cylindrical all-solid-state battery according to an example embodiment of the present disclosure.
FIG. 4 illustrates a cross-sectional view taken along line A-A' of FIG. 3.
FIGS. 5 to 9 are diagrams illustrating a method of fabricating an all-solid-state battery according to an example embodiment of the present disclosure.
FIG. 10 is a plan view illustrating a cylindrical all-solid-state battery according to an example embodiment of the present disclosure.
FIG. 11 illustrates a cross-sectional view taken along line A-A' of FIG. 10.

### DETAILED DESCRIPTION

In order to sufficiently understand the configuration and effect of the present disclosure, some example embodiments of the present disclosure are described with reference to the accompanying drawings. It should be noted, however, that the present disclosure is not limited to the following example embodiments, and may be implemented in various forms. Rather, the example embodiments are provided only to disclose the present disclosure and let those skilled in the art fully know the scope of the present disclosure.

In this description, it is understood that, when an element is referred to as being "on" another element, the element can be directly on the other element, or intervening elements may be present between therebetween. In the drawings, thicknesses of some components are exaggerated for effectively explaining the technical contents. Like reference numerals refer to like elements throughout the specification.

Some example embodiments detailed in this description are discussed with reference to sectional and/or plan views as ideal example views of the present disclosure. In the drawings, thicknesses of layers and regions may be exaggerated for effectively explaining the technical contents. Accordingly, regions exemplarily illustrated in the drawings have general properties, and shapes of regions exemplarily illustrated in the drawings are used to exemplarily disclose specific shapes but not limited to the scope of the present disclosure. It is understood that, although the terms "first", "second", "third," etc. may be used herein to describe various elements, these elements should not be limited by these terms. These terms are only used to distinguish one element from another element. The example embodiments explained and illustrated herein include complementary example embodiments thereof.

The terminology used herein is for the purpose of describing example embodiments only and is not intended to limit the present disclosure. As used herein, the singular forms are intended to include the plural forms as well. The terms 'comprises/includes' and/or 'comprising/including' used in the specification do not exclude the presence or addition of one or more other components.

Unless otherwise especially defined in this description, a particle diameter may be an average particle diameter. In addition, a particle diameter indicates an average particle diameter (D₅₀) where a cumulative volume is about 50 volume % in a particle size distribution. The average particle diameter (D₅₀) may be measured by a method widely known to those skilled in the art, for example, by a particle size analyzer, a transmission electron microscope (TEM) image, or a scanning electron microscope (SEM) image. Alternatively, a dynamic light-scattering measurement device is used to perform a data analysis, the number of particles is counted for each particle size range, and then from this, an average particle diameter (D₅₀) value may be obtained through a calculation. Dissimilarly, a laser scattering method may be utilized to measure the average particle diameter (D₅₀). In the laser scattering method, a target particle is distributed in a dispersion solvent, introduced into a laser scattering particle measurement device (e.g., MT3000 commercially available from Microtrac, Inc), irradiated with ultrasonic waves of 28 kHz at a power of 60 W, and then an average particle diameter (D₅₀) is calculated in the 50% standard of particle diameter distribution in the measurement device.

When the terms "about" or "substantially" are used in this specification in connection with a numerical value, it is intended that the associated numerical value include a tolerance of ±10% around the stated numerical value. When ranges are specified, the range includes all values therebetween such as increments of 0.1%.

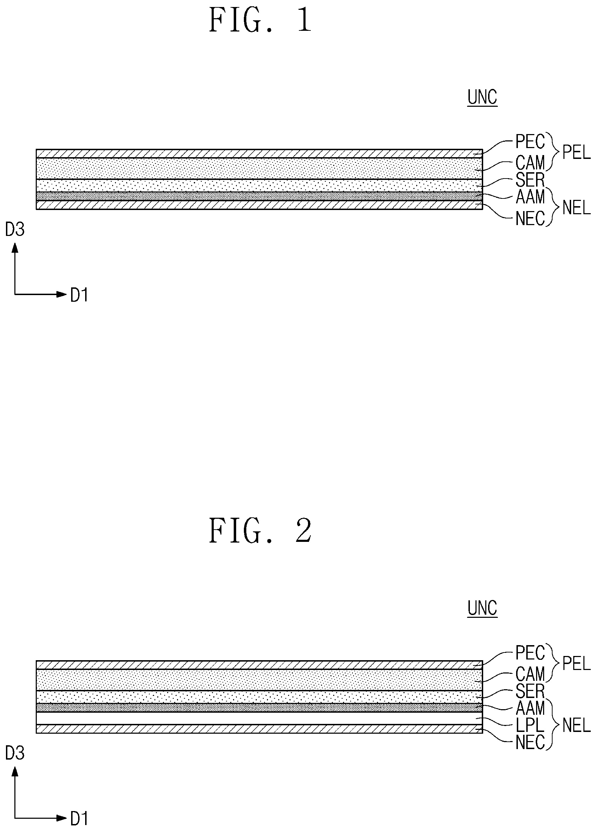

FIG. 1 is a cross-sectional view illustrating an all-solid-state battery according to an example embodiment of the present disclosure. FIG. 2 illustrates a cross-sectional view showing an all-solid-state battery according to an example embodiment of the present disclosure.

Referring to FIG. 1, a unit cell UNC of an all-solid-state battery according to the present disclosure may include a positive electrode layer PEL, a negative electrode layer NEL opposite the positive electrode layer PEL, and a solid electrolyte layer SER located between the positive electrode layer PEL and the negative electrode layer NEL. The negative electrode layer NEL, the solid electrolyte layer SER, and the positive electrode layer PEL may be stacked, e.g., sequentially stacked, along a substantially vertical direction or a third direction D3. In an example embodiment, the unit cell UNC may further include an additional functional layer, such as, e.g., an adhesion improvement layer, provided between the positive electrode layer PEL and the solid electrolyte layer SER, or between the negative electrode layer NEL and the solid electrolyte layer SER.

The positive electrode layer PEL according to an example embodiment of the present disclosure may include a positive electrode current collector PEC and a positive electrode active material layer CAM on the positive electrode current collector PEC. The positive electrode active material layer CAM may include at least one of a positive electrode active material, a solid electrolyte, a conductive material, and a binder.

The positive electrode current collector PEC may provide a reference surface on which the positive electrode active material layer CAM is disposed. The positive electrode current collector PEC may include a plate or foil including, for example, at least one of indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof.

Differently from what is illustrated in FIG. 1, in an example embodiment of the present disclosure, the positive electrode current collector PEC may be omitted. In another example, although not shown, to increase adhesiveness between the positive electrode current collector PEC and the positive electrode active material layer CAM, a carbon layer having a thickness in a range of ≥ 0.1 µm to ≤ 4 µm may further be disposed between the positive electrode current collector PEC and the positive electrode active material layer CAM.

The positive electrode active material of the positive electrode active material layer CAM may include a material that is configured to reversibly absorb and desorb lithium ions. The positive electrode active material may include a plurality of particles. The positive electrode active material may include, for example, at least one of lithium transition metal oxide (e.g., lithium cobalt oxide (LCO), lithium nickel oxide, lithium nickel cobalt oxide, lithium nickel cobalt aluminum oxide (NCA), lithium nickel cobalt manganese oxide (NCM), lithium manganate, or lithium iron phosphate), nickel sulfide, copper sulfide, lithium sulfide, iron oxide, or vanadium oxide, but the present disclosure is not limited thereto. The positive electrode active material may be used alone or in a mixture of two or more substances.

The lithium transition metal oxide may be or include, for example, a compound represented by one of LiₐA_{1-b}B_{b}D₂ (where 0.90≤a≤1 and 0≤b≤0.5), LiₐE_{1-b}B_{b}O_{2-c}D_{c} (where 0.90≤a≤1, 0≤b≤0.5, and 0≤c≤0.05), LiE_{2-b}B_{b}O_{4-c}D_{c} (where 0≤b≤0.5 and 0≤c≤0.05), LiₐNi_{1-b-c}Co_{b}B_{c}D_{α} (where 0.90≤a≤1, 0≤b≤0.5, 0≤c≤0.05, and 0<α<2), LiₐNi_{1-b-c}CO_{b}B_{c}O_{2-α}F_{α} (where 0.90≤a≤1, 0≤b≤0.5, 0≤c≤0.05, and 0<α<2), LiₐNi_{1-b-c}Mn_{b}B_{c}D_{α} (where 0.90≤a≤1, 0≤b≤0.5, 0≤c≤0.05, and 0<α<2), LiₐNi_{1-b-c}Mn_{b}B_{c}O_{2-α}F_{α} (where 0.90≤a≤1, 0≤b≤0.5, 0≤c≤0.05, and 0<α<2), LiₐNi_{b}E_{c}G_{d}O₂ (where 0.90≤a≤1, 0≤b≤0.9, 0≤c≤0.5, and 0.001≤d≤0.1), LiₐNi_{b}Co_{c}Mn_{d}GeO₂ (where 0.90≤a≤1, 0≤b≤0.9, 0≤c≤0.5, 0≤d≤0.5, and 0.001≤e≤0.1), LiₐNiG_{b}O₂ (where 0.9≤a≤1 and 0.001≤b≤0.1), LiₐCoG_{b}O₂ (where 0.90≤a≤1 and 0.001≤b≤0.1), LiₐMnG_{b}O₂ (where 0.90≤a≤1 and 0.001≤b≤0.1), LiₐMn₂GbO₄ (where 0.90≤a≤1 and 0.001≤b≤0.1), QO₂, QS₂, LiQS₂, V₂O₅, LiV₂O₅, LiIO₂, LiNiVO₄, Li_{3-f}J₂(PO₄)₃ (where 0≤f≤2), Li_{3-f}Fe₂(PO₄)₃ (where 0≤f≤2), LiFePO₄. In the compounds above, "A" may be or include at least one of Ni, Co, Mn, or a combination thereof, "B" may be or include at least one of Al, Ni, Co, Mn, Cr, Fe, Mg, Sr, V, a rare-earth element, or a combination thereof, "D" may be or include at least one of O, F, S, P, or a combination thereof, "E" may be or include at least one of Co, Mn, or a combination thereof, "F" may be or include at least one of F, S, P, or a combination thereof, "G" may be or include at least one of Al, Cr, Mn, Fe, Mg, La, Ce, Sr, V, or a combination thereof, "Q" may be or include at least one of Ti, Mo, Mn, or a combination thereof, "I" may be or include at least one of Cr, V, Fe, Sc, Y, or a combination thereof, and "J" may be or include at least one of V, Cr, Mn, Co, Ni, Cu, or a combination thereof.

The positive electrode active material may include, for example, lithium salt of transition metal oxide having a layered rock salt type structure among lithium transition metal oxides discussed above. The term "layered rock salt type structure" may refer to a structure in which an oxygen atom layer and a metal atom layer are alternately and regularly arranged in a <111> direction of a cubic rock salt type structure, where each atom layer forms a two-dimensional plane. The term "cubic rock salt type structure" may refer to a sodium chloride (NaCl) type structure, which is a type of crystal structure, and for example, has a structure in which face centered cubic lattices (FCCs) each formed of or including cations and anions are arranged displaced from each other by 1/2 of a ridge of a unit lattice. The lithium transition metal oxide having the layered rock salt type structure may be or include a ternary lithium transition metal oxide, such as, e.g., LiNiₓCo_{y}Al_{z}O₂ (NCA) or LiNiₓCo_{y}Mn_{z}O₂ (NCM) (where 0<x<1, 0<y<1, 0<z<1, and x+y+z=1). When the positive electrode active material includes a ternary lithium transition metal oxide having the layered rock salt type structure, the unit cell UNC may improve in energy density and thermal stability.

The compound included in the positive electrode active material may be covered with a coating layer (not shown). The positive electrode active material may be used in a mixture of the compound and a compound to which the coating layer is added. The coating layer added to a surface of the positive electrode active material may include, for example, at least one of oxide, hydroxide, oxyhydroxide, oxycarbonate, or hydrocarbonate of a coating element discussed below. The compound forming the coating layer may be amorphous or crystalline. The coating element included in the coating layer may include at least one of Mg, Al, Co, K, Na, Ca, Si, Ti, V, Sn, Ge, Ga, B, As, Zr, or a mixture thereof. The coating layer may include, for example, Li₂O-ZrO₂ (LZO). A method for forming the coating layer may be selected within any methods that do not adversely affect physical characteristics of the positive electrode active material. For example, spray coating or immersion may be utilized to form the coating layer.

When the positive electrode active material includes nickel (Ni) as a ternary lithium transition metal oxide such as NCA or NCM, a capacity of the unit cell UNC may be increased to reduce metal elution of the positive electrode active material in a charged state. As a result, the unit cell UNC may have improved cycle characteristics in a charged state. The language "cycle characteristics" may refer to properties that indicate the degree to which the unit cell UNC is degraded due to charge and discharge. A unit cell UNC with high cycle characteristics may degrade less due to charge and discharge, and a unit cell UNC with low cycle characteristics may degrade more due to charge and discharge.

The positive electrode active material may have a substantially spherical or substantially oval particle shape. There is no limitation on a particle diameter and an amount of the positive electrode active material.

The solid electrolyte in the positive electrode active material layer CAM may have a particle shape. The solid electrolyte may be dispersed between the positive electrode active materials. The solid electrolyte may include a sulfide-based solid electrolyte with desired or improved lithium-ion conductivity characteristics. The sulfide-based solid electrolyte may include, for example, at least one of Li₂S-P₂S₅, Li₂S-P₂S₅-LiX (where X is a halogen element), Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (where m and n are each a positive integer, the capital "Z" is one of Ge, Zn, and Ga), Li₂S-GeS₂, Li₂S-SiS₂-Li₃PO₄, Li₂S-SiS₂-LiₚMO_{q} (where p and q are each a positive integer, the capital "M" is one of P, Si, Ge, B, Al, Ga, and In), Li₇₋ₓPS₆₋ₓClₓ (where 0≤x≤2), Li₇₋ₓPS₆₋ₓBrₓ (where 0≤x≤2), and Li₇₋ₓPS₆₋ₓIₓ (where 0≤x≤2).

The sulfide-based solid electrolyte may be or include an argyrodite-type compound including, for example, at least one of Li₇₋ₓPS₆₋ₓClₓ (where 0≤x≤2), Li₇₋ₓPS₆₋ₓBrₓ (where 0≤x≤2), and Li₇₋ₓPS₆₋ₓIₓ (where 0≤x≤2). For example, the sulfide-based solid electrolyte may be an argyrodite-type compound including at least one of Li₆PS₅Cl, Li₆PS₅Br, and Li₆PS₅I.

Alternatively, the sulfide-based solid electrolyte may be or include an argyrodite-type compound including Li₇₋ₐMₐPS_{6-c}X_{c} (where 0≤a≤2 and 0≤c≤2). In the chemical formula above, X may be or include at least one of F, Br, Cl, or a **combination** thereof. In addition, M may be or include at least one of scandium (Sc), yttrium (Y), titanium (Ti), zirconium (Zr), hafnium (Hf), vanadium (V), niobium (Nb), tantalum (Ta), chromium (Cr), molybdenum (Mo), tungsten (W), manganese (Mn), technetium (Tc), rhenium (Re), iron (Fe), ruthenium (Ru), osmium (Os), cobalt (Co), rhodium (Rh), iridium (Ir), nickel (Ni), palladium (Pd), platinum (Pt), copper (Cu), silver (Ag), gold (Au), zinc (Zn), cadmium (Cd), mercury (Hg), aluminum (Al), gallium (Ga), indium (In), thallium (Tl), silicon (Si), germanium (Ge), tin (Sn), lead (Pb), arsenic (As), antimony (Sb), bismuth (Bi), or any combination thereof.

The argyrodite-type solid electrolyte may have a density in a range of ≥ 1.5 g/cc to ≤ 2.0 g/cc. As the argyrodite-type solid electrolyte has a density of equal to or greater than about 1.5 g/cc, it may be possible to decrease an internal resistance of an all-solid-state battery and to reduce or prevent a solid electrolyte layer from short-circuit and penetration caused by the formation of lithium dendrite. The solid electrolyte may have an elastic modulus in a range of, for example, ≥ 15 GPa to ≤ 35 GPa.

The solid electrolyte in the positive electrode active material layer CAM may have an average particle diameter that is less than the particle diameter of a solid electrolyte in the solid electrolyte layer SER which is discussed below. For example, an average particle diameter of the solid electrolyte in the positive electrode active material layer CAM may be equal to or less than about 90%, equal to or less than about 80%, equal to or less than about 70%, equal to or less than about 60%, equal to or less than about 50%, equal to or less than about 40%, equal to or less than about 30%, or equal to or less than about 20% of an average particle diameter of a solid electrolyte included in the solid electrolyte layer SER. The average particle diameter may be a median diameter measured by a laser particle size distribution analyzer.

The positive electrode active material layer CAM may include a conductive material. The conductive material may have conductivity without causing chemical change of the unit cell UNC to increase conductivity of the positive electrode active material and the solid electrolyte. The conductive material may include a carbon-based material. The conductive material may include, for example, one or more of graphite, carbon black, acetylene black, carbon nano-fiber, and carbon nano-tube.

The positive electrode active material layer CAM may further include a binder. The binder may be configured to bind the positive electrode active material, the solid electrolyte, and the conductive material to each other in the positive electrode active material layer CAM. The binder may include a material for improving an adhesive force between the positive electrode active material layer CAM and the positive electrode current collector PEC. The binder may include, for example, at least one of polyvinylidene fluoride, styrene butadiene rubber (SBR), polytetrafluoroethylene, polyvinylidenefluoride, vinylidene fluoride/hexafluoropropylene copolymer, polyacrylonitrile, and polymethyl methacrylate.

Based on the total 100 parts by weight of the positive electrode active material, the solid electrolyte, the conductive material, and the binder, the positive electrode active material may be included in an amount of ≥ 70 parts by weight to ≤ 92 parts by weight in the positive electrode active material layer CAM. Based on the total 100 parts by weight of the positive electrode active material, the solid electrolyte, the conductive material, and the binder, the binder may be included in an amount of ≥ 0.5 parts by weight to ≤ 1.5 parts by weight in the positive electrode active material layer CAM.

Based on the total 100 parts by weight of the solid electrolyte, the conductive material may be included in an amount of ≥ 1 part by weight to ≤ 50 parts by weight in the positive electrode active material layer CAM. When the positive electrode active material layer CAM includes the conductive material which amount is less than about 1 part by weight based on 100 parts by weight of the solid electrolyte, a ratio of the conductive material may be reduced to decrease electrical conductivity of the positive electrode active material layer CAM. When the positive electrode active material layer CAM includes the conductive material which amount is greater than about 50 parts by weight based on 100 parts by weight of the solid electrolyte, a ratio of the conductive material may be excessively increased and may cause incomplete formation of a coating layer that covers a surface of the solid electrolyte.

The positive electrode active material layer CAM may further include an additive, such as, e.g., at least one of a filler, a coating agent, a dispersant, and an ion conductivity agent, in addition to the positive electrode active material, the solid electrolyte, the conductive material, and the binder.

The negative electrode layer NEL may include a negative electrode current collector NEC and a negative electrode coating layer AAM on the negative electrode current collector NEC. The negative electrode current collector NEC may provide a reference surface on which the negative electrode coating layer AAM is disposed. The negative electrode current collector NEC may include a material that does not react with lithium, for example, a material that does not form an alloy or a compound with lithium. For example, the negative electrode current collector NEC may include at least one of copper (Cu), stainless steel, titanium (Ti), iron (Fe), cobalt (Co), and nickel (Ni). The negative electrode current collector NEC may have a thickness in a range of ≥ 1 µm to ≤ 20 µm, ≥ 5 µm to ≤ 15 µm, or ≥ 7 µm to ≤ 10 µm.

The negative electrode current collector NEC may be formed of or include one of the metals mentioned above, an alloy of two or more of the metals mentioned above, or a coating material. The negative electrode current collector NEC may have, for example, a plate or foil shape. In an example embodiment, the negative electrode current collector NEC may be omitted.

The negative electrode coating layer AAM may induce growth of lithium metal between the negative electrode coating layer AAM and the negative electrode current collector NEC when the unit cell UNC is charged. The negative electrode coating layer AAM may constitute a protection layer for lithium metal and simultaneously or contemporaneously may reduce or suppress precipitation and growth of lithium dendrite.

The negative electrode coating layer AAM may include a composite of metal and carbon. For example, the negative electrode coating layer AAM may **include** at least one of gold (Au), platinum (Pt), palladium (Pd), silicon (Si), silver (Ag), aluminum (Al), bismuth (Bi), tin (Sn), and zinc (Zn). The negative electrode coating layer AAM may include at least one of carbon black, acetylene black, furnace black, Ketjen black, and graphene. In an example embodiment, the negative electrode coating layer AAM may include a composite (or mixture) of carbon black and silver (Ag).

The negative electrode coating layer AAM may further include an additive in addition to metal and carbon. The negative electrode coating layer AAM may include at least one additive such as or including, for example, at least one of a binder, a filler, a coating agent, a dispersant, and an ion conductivity agent.

The negative electrode coating layer AAM may have a thickness that is less than the thickness of the positive electrode active material layer CAM. For example, the negative electrode coating layer AAM may have a thickness that is equal to or less than about 50%, equal to or less than about 40%, equal to or less than about 30%, equal to or less than about 20%, equal to or less than about 10%, or equal to or less than about 5% of the thickness of the positive electrode active material layer CAM. The negative electrode coating layer AAM may have a thickness in a range of, for example, ≥ 1 µm to ≤ 20 µm, ≥ 2 µm to ≤ 10 µm, or ≥ 3 µm to ≤ 7 µm. When the negative electrode coating layer AAM has an excessively small thickness, a lithium dendrite formed between the negative electrode coating layer AAM and the negative electrode current collector NEC may collapse the negative electrode coating layer AAM and reduce cycle characteristics of the unit cell UNC. When the negative electrode coating layer AAM has an excessively large thickness, the unit cell UNC may have a decreased energy density and an increased internal resistance caused by the negative electrode coating layer AAM, thereby reducing cycle characteristics of the unit cell UNC.

Although not shown, the negative electrode coating layer AAM and the solid electrolyte layer SER may further include therebetween a carbon layer for improving an adhesive force.

The solid electrolyte layer SER may be provided between the positive electrode layer PEL and the negative electrode layer NEL. The solid electrolyte layer SER may include a sulfide-based solid electrolyte with desired or improved lithium-ion conductivity characteristics. The solid electrolyte in the solid electrolyte layer SER may be the same as or different from one of the materials included in the solid electrolyte in the positive electrode active material layer CAM.

The solid electrolyte in the solid electrolyte layer SER may have a substantially spherical or substantially oval particle shape. The solid electrolyte may include a sulfide-based solid electrolyte. The solid electrolyte may be in an amorphous state, a crystalline state, or a mixed state of amorphous and crystalline states. The solid electrolyte may include at least one of sulfur (S), phosphorus (P), and lithium (Li) among component elements included in the sulfide-based solid electrolyte mentioned above. For example, the solid electrolyte may be or include a material including Li₂S-P₂S₅. When a material including Li₂S-P₂S₅ is included as a sulfide-based solid electrolyte material of the solid electrolyte, a mixing molar ratio of Li₂S and P₂S₅ may be in a range of about 50:50 to about 90:10 (or Li₂S:P₂S₅ = 50:50 ~ 90:10).

In an example embodiment, the sulfide-based solid electrolyte may be or include an argyrodite-type compound including at least one of Li₇₋ₓPS₆₋ₓClₓ (where 0≤x≤2), Li₇₋ₓPS₆₋ₓBrₓ (where 0≤x≤2), and Li₇₋ₓPS₆₋ₓIₓ (where 0≤x≤2). The sulfide-based solid electrolyte may be or include an argyrodite-type compound including at least one of Li₆PS₅Cl, Li₆PS₅Br, and Li₆PS₅I.

In an example embodiment, the solid electrolyte may include an argyrodite-type compound including Li₇₋ₐMₐPS_{6-c}X_{c}. In the chemical formula above, X may be or include at least one of Cl, Br, or a combination thereof. M may be or include at least one of Na, K, Fe, Mg, Ca, Ag, Cu, Zr, Zn, or a combination thereof. In addition, a and c may each be a real number between 0 and 2.

The argyrodite-type solid electrolyte may have a density in a range of ≥ 1.5 g/cc to about 2.0 g/cc. As the argyrodite-type solid electrolyte has a density equal to or greater than about 1.5 g/cc, it may be possible to decrease an internal resistance of an all-solid-state battery and to reduce or prevent a solid electrolyte layer from short-circuit and penetration caused by the formation of lithium dendrite. The solid electrolyte may have an elastic modulus in a range of, for example, ≥ 15 GPa to ≤ 35 GPa.

The solid electrolyte layer SER may further include a binder. The binder included in the solid electrolyte layer SER may include at least one of styrenebutadiene rubber (SBR), polytetrafluoroethylene, polyvinylidene fluoride, polyethylene, but the present disclosure is not limited thereto. The binder of the solid electrolyte layer SER may be the same as or similar to the binder of the positive electrode active material layer CAM, or the binder of the negative electrode coating layer AAM.

Referring to FIG. 2, the negative electrode layer NEL of the unit cell UNC may further include a lithium metal layer LPL between the negative electrode current collector NEC and the negative electrode coating layer AAM. The lithium metal layer LPL may have a thickness that increases when the unit cell UNC is charged. The negative electrode coating layer AAM may constitute a protection layer for the lithium metal layer LPL and simultaneously or contemporaneously may reduce or suppress growth of lithium dendrite from the lithium metal layer LPL.

The lithium metal layer LPL may be or include a thin metal layer including lithium or a lithium alloy. The lithium alloy may be or include at least one of Li-Al alloy, Li-Sn alloy, Li-In alloy, Li-Ag alloy, Li-Au alloy, Li-Zn alloy, Li-Ge alloy, or Li-Si alloy, but any suitable lithium alloys may be used. The lithium metal layer LPL may include lithium or one of the alloys mentioned above. Alternatively, the lithium metal layer LPL may include many types of alloy.

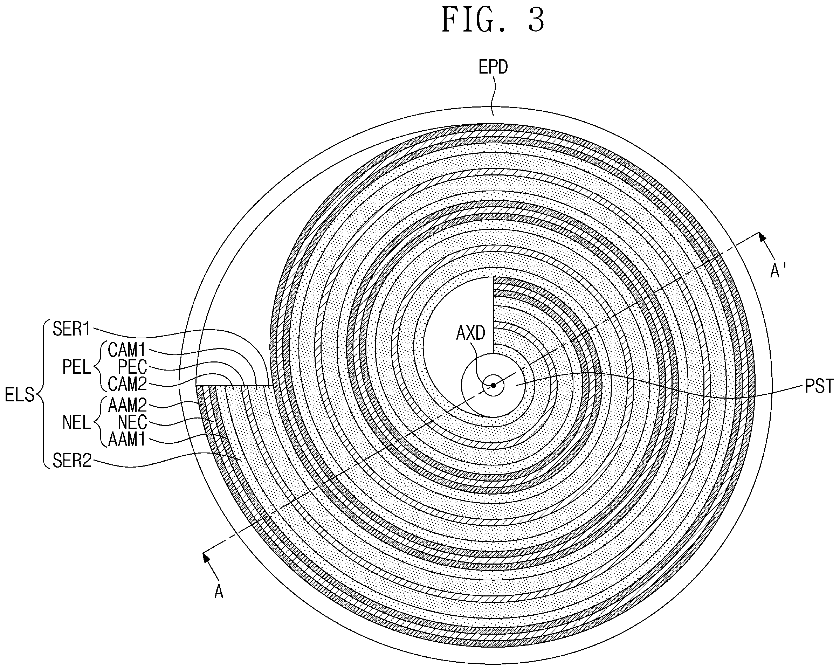

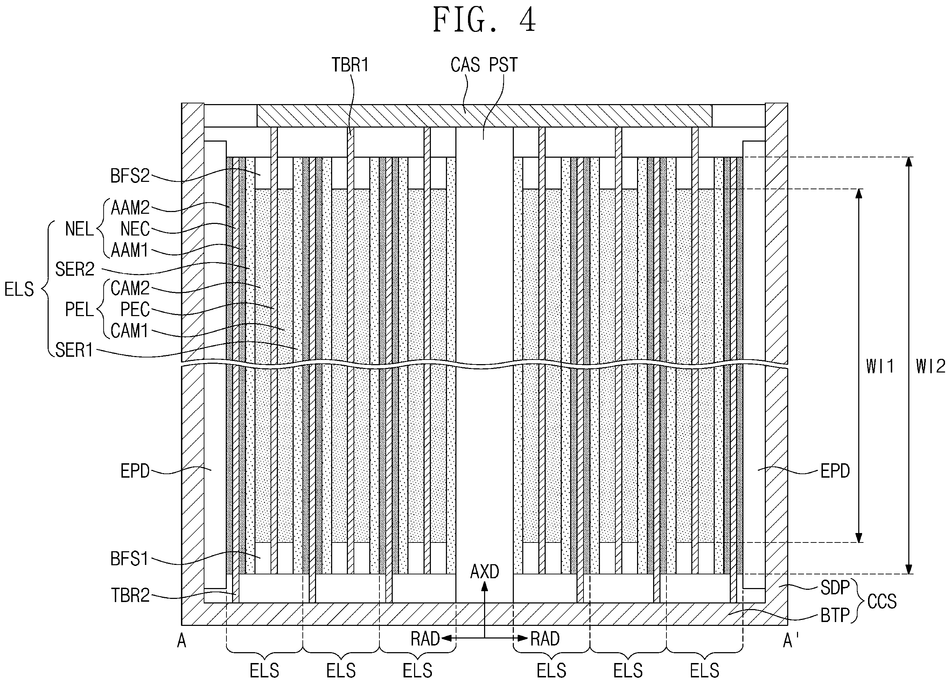

FIG. 3 is a plan view illustrating a cylindrical all-solid-state battery according to an example embodiment of the present disclosure. FIG. 4 is a cross-sectional view taken along line A-A' of FIG. 3. Referring to FIGS. 3 and 4, a cylindrical all-solid-state battery may include a cylindrical casing CCS and a cap assembly CAS. An electrode assembly ELS may be accommodated in the cylindrical casing CCS.

The cylindrical casing CCS may include a bottom portion BTP and a side portion SDP. The bottom portion BTP may have a circular plate shape. The side portion SDP may extend in an axial direction AXD from a circumference of the bottom portion BTP. The side portion SDP may have a hollow cylindrical shape. During the fabrication of the all-solid-state battery, an upper portion of the cylindrical casing CCS may be in an open state. The electrode assembly ELS may be inserted through the opened upper portion into the cylindrical casing CCS. As the cap assembly CAS covers or closes the opened upper portion of the cylindrical casing CCS, an inner space of the cylindrical casing CCS may be sealed substantially hermetically.

The cylindrical casing CCS may include at least one of steels, nickel-plated steels, stainless steels, aluminum, and aluminum alloys.

The electrode assembly ELS may include a first solid electrolyte layer SER1, a positive electrode layer PEL, a second solid electrolyte layer SER2, and a negative electrode layer NEL. The first solid electrolyte layer SER1, the positive electrode layer PEL, the second solid electrolyte layer SER2, and the negative electrode layer NEL may be provided, e.g., sequentially provided, along a radial direction RAD.

In the example embodiment, an axial direction AXD may correspond to an axial direction of the electrode assembly ELS shaped like a cylinder. The radial direction RAD may be a direction substantially perpendicular to the axial direction AXD. The radial direction RAD may correspond to a radial direction of the cylindrical electrode assembly ELS.

The positive electrode layer PEL of the electrode assembly ELS may include a first positive electrode active material layer CAM1, a second positive electrode active material layer CAM2, and a positive electrode current collector PEC between the first and second positive electrode active material layers CAM1 and CAM2. The first positive electrode active material layer CAM1 may be provided on a first surface of the positive electrode current collector PEC. The second positive electrode active material layer CAM2 may be provided on a second surface of the positive electrode current collector PEC. The first positive electrode active material layer CAM1 may be in contact with the first solid electrolyte layer SER1. The second positive electrode active material layer CAM2 may be in contact with the second solid electrolyte layer SER2.

The negative electrode layer NEL of the electrode assembly ELS may include a first negative electrode coating layer AAM1, a second negative electrode coating layer AAM2, and a negative electrode current collector NEC between the first and second negative electrode coating layers AAM1 and AAM2. The first negative electrode coating layer AAM1 may be provided on a first surface of the negative electrode current collector NEC. The second negative electrode coating layer AAM2 may be provided on a second surface of the negative electrode current collector NEC. The first negative electrode coating layer AAM1 may be in contact with the second solid electrolyte layer SER2. The second negative electrode coating layer AAM2 may be in contact with the first solid electrolyte layer SER1 adjacent in the radial direction RAD to the second negative electrode coating layer AAM2.

A description of each of the first and second positive electrode active material layers CAM1 and CAM2 may be substantially the same as the description of the positive electrode active material layer CAM discussed above with reference to FIG. 1. A description of each of the first and second negative electrode coating layers AAM1 and AAM2 may be substantially the same as the description of the negative electrode coating layer AAM discussed above with reference to FIG. 1. A description of the positive electrode current collector PEC and the negative electrode current collector NEC may be substantially the same as the description of the positive electrode current collector PEC and the negative electrode current collector NEC, respectively, discussed above with reference to FIG. 1. A description of each of the first and second solid electrolyte layers SER1 and SER2 may be substantially the same as the description of the solid electrolyte layer SER discussed above with reference to FIG. 1.

According to the example embodiment, a first width WI1 in the axial direction AXD of each, or at least one, of the first and second positive electrode active material layers CAM1 and CAM2 may be less than a second width WI2 in the axial direction AXD of each, or at least one, of the first and second solid electrolyte layers SER1 and SER2. First and second buffer structures BFS 1 and BFS2 may be provided to alleviate step differences, or height differences, between the positive electrode active material layers CAM1 and CAM2, and the first and second solid electrolyte layers SER1 and SER2.

The first and second buffer structures BFS 1 and BFS2 may be disposed correspondingly adjacent to opposite sides of the first positive electrode active material layer CAM1. The first and second buffer structures BFS 1 and BFS2 may be interposed between the first solid electrolyte layer SER1 and the first surface of the positive electrode current collector PEC.

The first and second buffer structures BFS 1 and BFS2 may be disposed correspondingly adjacent to opposite sides of the second positive electrode active material layer CAM2. The first and second buffer structures BFS 1 and BFS2 may be interposed between the second solid electrolyte layer SER2 and the second surface of the positive electrode current collector PEC.

The first and second buffer structures BFS 1 and BFS2 may include at least one polymer such as or including at least one of polyimide, polyester, polypropylene, polyamide, polystyrene, polyvinyl chloride, and polycarbonate. The first and second buffer structures BFS 1 and BFS2 may structurally compensate relatively small first widths WI1 of the positive electrode active material layers CAM1 and CAM2, thereby improving stability of electrode plates.

The electrode assembly ELS may be wound along a circumferential direction around the axial direction AXD. Thus, the electrode assembly ELS may have a substantially cylindrical shape. As the electrode assembly ELS is wound in a substantially cylindrical shape, the first solid electrolyte layer SER1, the positive electrode layer PEL, the second solid electrolyte layer SER2, and the negative electrode layer NEL may be repeated along the radial direction RAD.

An elastic pad EPD may be provided to wrap a circumference of the electrode assembly ELS. The elastic pad EPD may be interposed between the cylindrical casing CCS and the electrode assembly ELS. The elastic pad EPD may have a substantially cylindrical shape which top and bottom portions are open. The elastic pad EPD may be in direct contact with the side portion SDP of the cylindrical casing CCS. The elastic pad EPD may cover an inner sidewall of the side portion SDP.

The elastic pad EPD may include a dielectric material. The elastic pad EPD may include a resilient material. For example, the elastic pad EPD may include at least one of epoxy resin, acrylic resin, polyimide resin, polyester resin, polypropylene resin, polyamide resin, polystyrene resin, polyvinyl chloride resin, polycarbonate resin, fluororesin such as PTFE, and silicon rubber.

The elastic pad EPD may be configured to reduce a change in volume of the electrode assembly ELS during charge and discharge of the battery. As discussed above with reference to FIG. 2, an increase in state of charge (SOC) of the electrode assembly ELS may cause growth of the lithium metal layer LPL in the negative electrode layer NEL. For example, the increase in SOC of the electrode assembly ELS may induce an increase in volume of the electrode assembly ELS. The substantially cylindrical casing CCS may have a fixed internal volume. The elastic pad EPD may receive the increase in volume of the electrode assembly ELS to maintain a stable state of the all-solid-state battery. In addition, the elastic pad EPD may allow the electrode assembly ELS to have an internal pressure maintained at a substantially constant level.

The positive electrode current collector PEC of the electrode assembly ELS may include a first tab region TBR1. The negative electrode current collector NEC of the electrode assembly ELS may include a second tab region TBR2. In an example embodiment, the first tab region TBR1 may be electrically connected to the cap assembly CAS, while upwardly protruding toward the cap assembly CAS. The second tab region TBR2 may be electrically connected to the bottom portion BTP of the cylindrical casing CCS, while downwardly protruding toward the bottom portion BTP.

In an example embodiment of the present disclosure, a pin structure PST may be provided on a center of the electrode assembly ELS. The pin structure PST may have a substantially cylindrical shape that extends along the axial direction AXD. For example, the pin structure PST may include a resilient material that is the same as or similar to the material of the elastic pad EPD. Similar to the elastic pad EPD, the pin structure PST may be configured to receive a change in volume of the electrode assembly ELS.

In an example embodiment of the present disclosure, the pin structure PST may be omitted.

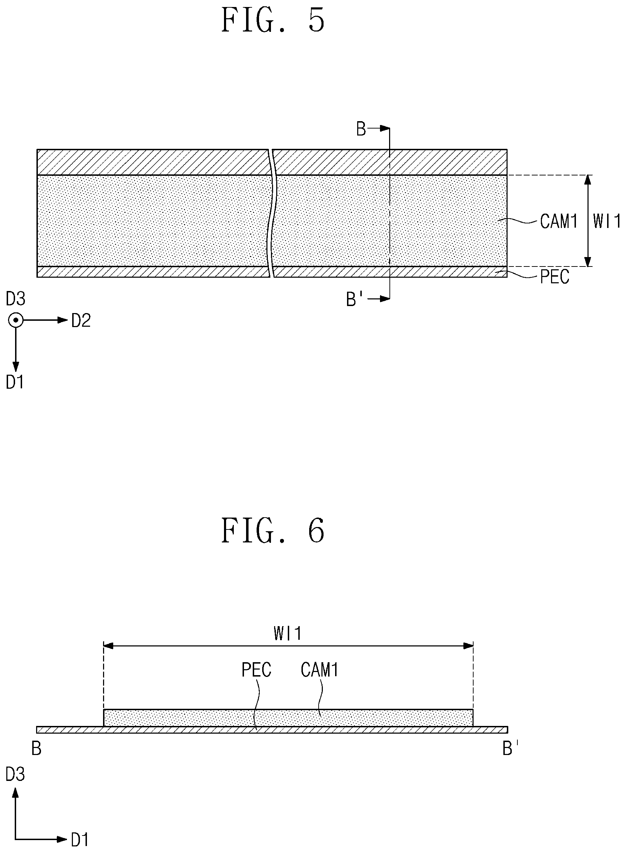

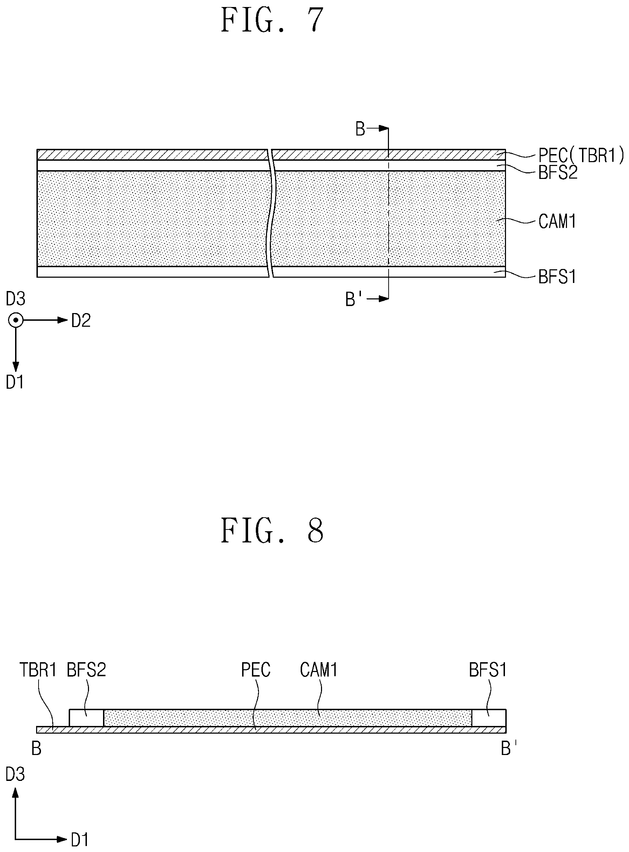

FIGS. 5 to 9 are cross-sectional views illustrating a method of fabricating an all-solid-state battery, according to an example embodiment of the present disclosure. FIG. 6 illustrates a cross-sectional view taken along line B-B' of FIG. 5. FIG. 8 illustrates a cross-sectional view taken along line B-B' of FIG. 7.

Referring to FIGS. 5 and 6, a positive electrode current collector PEC may be provided. The positive electrode current collector PEC may have a sheet shape that extends in a second direction D2. A first positive electrode active material layer CAM1 may be formed on a first surface of the positive electrode current collector PEC. The formation of the first positive electrode active material layer CAM1 may include coating a positive electrode slurry on the first surface of the positive electrode current collector PEC, and drying the coated slurry. The first positive electrode active material layer CAM1 may be formed to have a first width WI1. The first width WI1 may be less than a width of the positive electrode current collector PEC.

Referring to FIGS. 7 and 8, first and second buffer structures BFS 1 and BFS2 may be formed on the first surface of the positive electrode current collector PEC, which first surface is exposed by the first positive electrode active material layer CAM1. The formation of the first and second buffer structures BFS1 and BFS2 may include coating a polymer on the exposed first surface of the positive electrode current collector PEC, and drying the coated polymer.

The first buffer structure BFS1 may be adjacent to a first lateral surface of the first positive electrode active material layer CAM1. The first buffer structure BFS1 may substantially completely cover a surface of the positive electrode current collector PEC, which surface is exposed adjacent to the first lateral surface.

The second buffer structure BFS2 may be adjacent to a second lateral surface of the first positive electrode active material layer CAM1. The second buffer structure BFS2 may partially cover a surface of the positive electrode current collector PEC, which surface is exposed adjacent to the second lateral surface. The first tab region TBR1 of the positive electrode current collector PEC may be exposed without being covered with the second buffer structure BFS2.

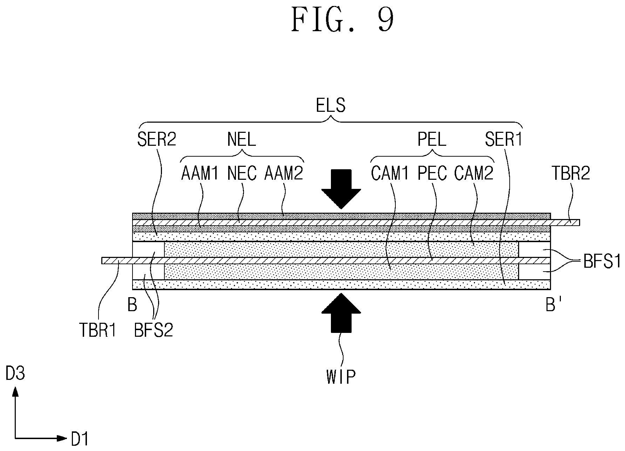

Referring to FIG. 9, a second positive electrode active material layer CAM2, a first buffer structure BFS 1, and a second buffer structure BFS2 may be formed on the second surface of the positive electrode current collector PEC.

A first negative electrode coating layer AAM1 may be formed on a first surface of a negative electrode current collector NEC. A second negative electrode coating layer AAM2 may be formed on a second surface of the negative electrode current collector NEC.

A first solid electrolyte layer SER1, a positive electrode layer PEL, a second solid electrolyte layer SER2, and a negative electrode layer NEL may be stacked, e.g., sequentially stacked, and a lamination process may be performed to form an electrode assembly ELS. A pressing process WIP may be performed on the electrode assembly ELS. For example, the pressing process WIP on the electrode assembly ELS may include a warm isostatic press.

The electrode assembly ELS may be wound to form the electrode assembly ELS substantially shaped like a cylinder as discussed with reference to FIGS. 3 and 4. An elastic pad EPD may be provided to wrap a circumference of the electrode assembly ELS. The electrode assembly ELS and the elastic pad EPD may be inserted into a cylindrical casing CCS, thereby fabricating a cylindrical all-solid-state battery according to the present disclosure.

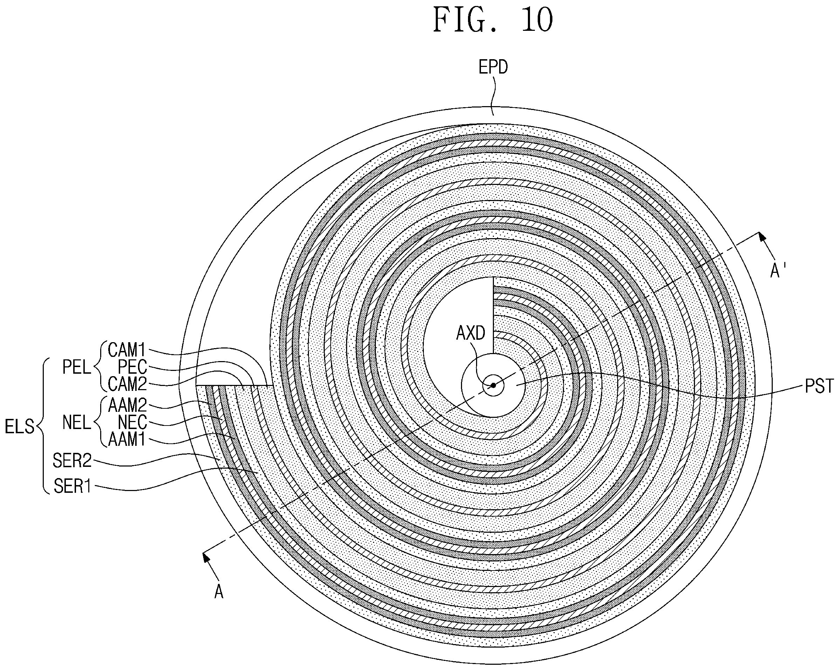

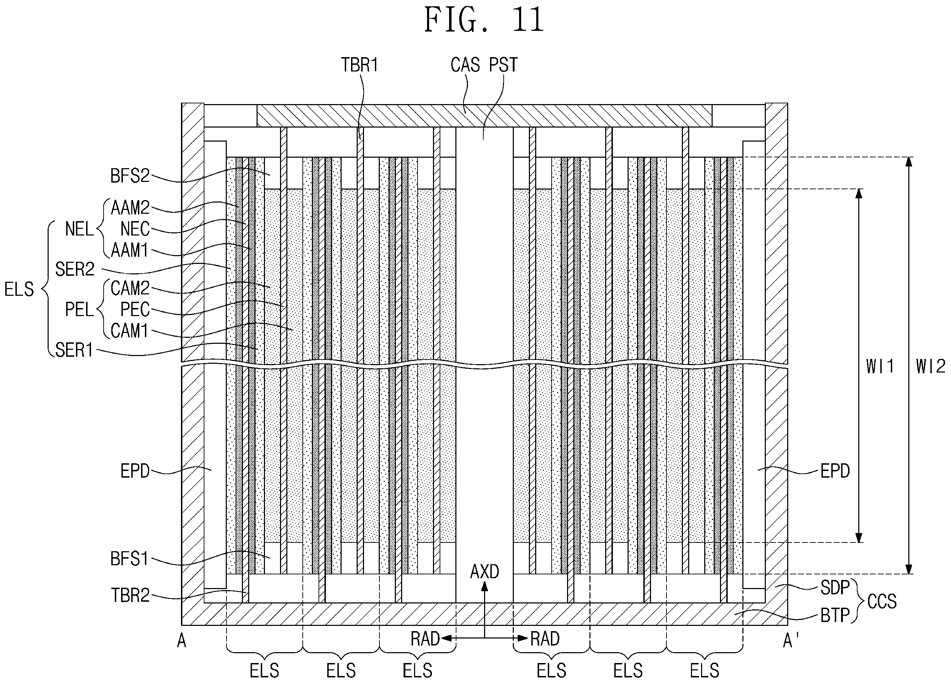

FIG. 10 illustrates a plan view showing a cylindrical all-solid-state battery according to an example embodiment of the present disclosure. FIG. 11 illustrates a cross-sectional view taken along line A-A' of FIG. 10. In the example embodiment that follows, a detailed description of technical features repetitive to the technical features discussed above with reference to FIGS. 3 and 4 is omitted, and a difference thereof is discussed in detail below.

Referring to FIGS. 10 and 11, the electrode assembly ELS may include a positive electrode layer PEL, a first solid electrolyte layer SER1, a negative electrode layer NEL, and a second solid electrolyte layer SER2. The positive electrode layer PEL, the first solid electrolyte layer SER1, the negative electrode layer NEL, and the second solid electrolyte layer SER2 may be provided, e.g., sequentially provided, along the radial direction RAD.

The electrode assembly ELS may be wound along the circumferential direction around the axial direction AXD. The positive electrode layer PEL, the first solid electrolyte layer SER1, the negative electrode layer NEL, and the second solid electrolyte layer SER2 may be repeated along the radial direction RAD. For example, the second solid electrolyte layer SER2 may be in contact with the positive electrode layer PEL adjacent in the radial direction RAD to the second solid electrolyte layer SER2.

The second solid electrolyte layer SER2 may be disposed on an outermost portion of the electrode assembly ELS. An elastic pad EPD may be provided to wrap a circumference of the electrode assembly ELS. The elastic pad EPD may be in contact, e.g., in direct contact, with the second solid electrolyte layer SER2.

The present disclosure may provide a cylindrical all-solid-state battery that can effectively buffer expansion of an electrode assembly. In the all-solid-state battery of the present disclosure, a pressing structure capable of pressing the electrode assembly may be reduced or minimized to increase an energy density of the battery. The present disclosure may include an all-solid-state battery including an electrode plate with improved stability.

While this disclosure has been described in connection with what is presently considered to be example embodiments, it is to be understood that the present disclosure is not limited to the disclosed example embodiments and is intended to cover various modifications and equivalent arrangements included within the spirit and scope of the appended claims, and therefore the aforementioned example embodiments should be understood to be examples but not limiting this disclosure in any way.

## Claims

1. A cylindrically wound electrode assembly (ELS), comprising:
a first solid electrolyte layer (SER1), a positive electrode layer (PEL), a second solid electrolyte layer (SER2), and a negative electrode layer (NEL),
wherein the first solid electrolyte layer (SER1), the positive electrode layer (PEL), the second solid electrolyte layer (SER2), and the negative electrode layer (NEL) are disposed along a radial direction (RAD) of the electrode assembly (ELS),
wherein the positive electrode layer (PEL) includes:
a positive electrode current collector (PEC);
a first positive electrode active material layer (CAM1) on a first surface of the positive electrode current collector (PEC) and in contact with the first solid electrolyte layer (SER1), wherein a first width (WI1) in an axial direction (AXD) of the first positive electrode active material layer (CAM1) is less than a second width (WI2) in the axial direction (AXD) of the first solid electrolyte layer (SER1);
a first buffer structure (BFS 1) adjacent to a first side of the first positive electrode active material layer (CAM1); and
a second buffer structure (BFS2) adjacent to a second side of the first positive electrode active material layer (CAM1).

2. The electrode assembly (ELS) of claim **1,** wherein:
the first buffer structure (BFS1) is on a first step difference between the first solid electrolyte layer (SER1) and the first side of the first positive electrode active material layer (CAM1), and
the second buffer structure (BFS2) is on a second step difference between the first solid electrolyte layer (SER1) and the second side of the first positive electrode active material layer (CAM1).

3. The electrode assembly (ELS) of claim 1 or claim 2, wherein:
the first positive electrode active material layer (CAM1) is between the positive electrode current collector (PEC) and the first solid electrolyte layer (SER1), and
the first and second buffer structures (BFS1, BFS2) are between the positive electrode current collector (PEC) and the first solid electrolyte layer (SER1).

4. The electrode assembly (ELS) according to any one of claims 1 to 3, wherein at least one of the first and second buffer structures (BFS1, BFS2) comprises a polymer layer coated on the positive electrode current collector (PEC).

5. The electrode assembly (ELS) according to any one of claims 1 to 4, further comprising an elastic sheet on an outermost portion of the electrode assembly (ELS).

6. The electrode assembly (ELS) according to any one of claims 1 to 5, further comprising a cylindrical pin structure on a center of the electrode assembly (ELS),
wherein the cylindrical pin structure includes a resilient material.

7. The electrode assembly (ELS) according to any one of claims 1 to 6, wherein a sum of the first width (WI1), a width of the first buffer structure (BFS1), and a width of the second buffer structure (BFS2) is substantially equal to the second width (WI2).

8. The electrode assembly (ELS) according to any one of claims 1 to 7, wherein the positive electrode layer (PEL) comprises:
a second positive electrode active material layer (CAM2) on a second surface of the positive electrode current collector (PEC) and in contact with the second solid electrolyte layer (SER2), wherein a third width of the second positive electrode active material layer (CAM2) is less than a fourth width of the second solid electrolyte layer (SER2);
a third buffer structure adjacent to a third side of the second positive electrode active material layer (CAM2); and
a fourth buffer structure adjacent to a fourth side of the second positive electrode active material layer (CAM2).

9. The electrode assembly (ELS) according to any one of claims 1 to 8, wherein the negative electrode layer (NEL) comprises:
a negative electrode current collector (NEC);
a first negative electrode coating layer (AAM1) on a first surface of the negative electrode current collector (NEC) and in contact with the second solid electrolyte layer (SER2); and
a second negative electrode coating layer (AAM2) on a second surface of the negative electrode current collector (NEC) and in contact with the first solid electrolyte layer (SER1).

10. The electrode assembly (ELS) of claim 9, wherein at least one of the first and second negative electrode coating layers (AAM1, AAM2) comprises a composite of carbon and at least one of gold (Au), platinum (Pt), palladium (Pd), silicon (Si), silver (Ag), aluminum (Al), bismuth (Bi), tin (Sn), and zinc (Zn).

11. The electrode assembly (ELS) of claim 9 or 10, wherein a width in the axial direction (AXD) of at least one of the first and second negative electrode coating layers (AAM1, AAM2) is greater than the first width (WI1).

12. A cylindrical all-solid-state battery, comprising:
a cylindrically wound electrode assembly (ELS);
a cylindrical casing (CCS) that accommodates the electrode assembly (ELS);
an elastic pad between the electrode assembly (ELS) and the cylindrical casing (CCS); and
a cap assembly (CAS) that closes an opened upper portion of the cylindrical casing (CCS),
wherein the electrode assembly (ELS) includes a positive electrode layer (PEL), a negative electrode layer (NEL), and a solid electrolyte layer (SER1) between the positive electrode layer (PEL) and the negative electrode layer (NEL), and
wherein the elastic pad wraps an outermost portion of the electrode assembly (ELS).

13. The all-solid-state battery of claim 12, wherein the positive electrode layer (PEL) comprises:
a positive electrode current collector (PEC);
a positive electrode active material layer (CAM1) on the positive electrode current collector (PEC) and in contact with the solid electrolyte layer (SER1), wherein a first width (WI1) in an axial direction (AXD) of the positive electrode active material layer (CAM1) is less than a second width (WI2) in the axial direction (AXD) of the solid electrolyte layer (SER1);
a first buffer structure (BFS 1) adjacent to a first side of the positive electrode active material layer (CAM1); and
a second buffer structure (BFS2) adjacent to a second side of the positive electrode active material layer (CAM2).

14. The all-solid-state battery of claim 13, wherein:
the first buffer structure (BFS 1) is on a first step difference between the solid electrolyte layer (SER1) and the first side of the positive electrode active material layer (CAM1), and
the second buffer structure (BFS2) is on a second step difference between the solid electrolyte layer (SER1) and the second side of the positive electrode active material layer (CAM2).

15. The cylindrical all-solid-state battery of claim 13 or **14,** wherein at least one of the first buffer structure (BFS1) and the second buffer structure (BFS2) comprises a polymer layer coated on the positive electrode current collector (PEC).
